# EUROPEAN PATENT SPECIFICATION

(11) **EP 2 090 091 B1**
(45) Date of publication and mention of the grant of the patent: **14.07.2010**
(21) Application number: 07813383.2
(22) Date of filing: 26.07.2007
(51) Int. Cl.: H04N 1/00, H04B 7/02, G06F 3/12

(54) **WIRELESS ADAPTER FOR A DIGITAL CAMERA**
DRAHTLOSER ADAPTER FÜR EINE DIGITALKAMERA
ADAPTATEUR SANS FIL POUR CAMÉRA NUMÉRIQUE

(30) Priority: 29.10.2006 US 863383 P; 22.05.2007 US 751761
(43) Date of publication of application: 19.08.2009
(73) Proprietor: Sony Ericsson Mobile Communications AB, 221 88 Lund (SE)
(72) Inventor: LOUKS, Ronald, Durham, North Carolina 27705 (US); FINDIKLI, Nadi Sakir, Cary, North Carolina 27511 (US); LILJA, Patrik, Raleigh, North Carolina 27606 (US); HAYES, Gerard James, Wake Forest, North Carolina 27587 (US)
(74) Representative: Banzer, Hans-Jörg
(86) International application number: PCT/US2007/074412
(87) International publication number: WO 2008/054897

(56) References cited:
- EP-A- 1 681 772
- WO-A-2006/029148
- GB-A- 2 415 863
- US-A- 6 049 705
- US-A1- 2003 090 572
- US-A1- 2003 200 361
- US-A1- 2004 201 680
- US-A1- 2004 239 772
- US-A1- 2005 036 034
- US-A1- 2005 064 825
- US-A1- 2006 073 848
- US-A1- 2006 093 340
- US-A1- 2006 176 506
- US-A1- 2006 195 162
- US-B1- 6 954 229

## Description

### BACKGROUND

The present invention relates generally to digital cameras and, more particularly, to wireless adapters for digital cameras to enable digital cameras to communicate with remote devices.

A digital camera is an electronic device for capturing and storing images electronically instead of on photographic film. Modern digital cameras have many advantages over conventional film cameras and have virtually replaced film cameras in the marketplace. Digital cameras are small, lightweight, and inexpensive to operate since no film is required. Digital cameras allow consumers to view images immediately after they are captured. Consumers can delete images they do not like and retake images. Images captured can be uploaded to photo libraries on the user's home computer or imported into photo-editing software.

Digital cameras typically include a USB or Firewire port for connecting the digital camera to the user's home computer. A cable plugs into the camera at one end and the computer at the other end. There are many circumstances in which a user may want to send images wirelessly to remote devices. Because many home computers now have wireless interfaces, it would be convenient for consumers to connect to home computers using a wireless interface. Further, long range wireless interfaces would enable users of digital cameras to access remote devices and services from whatever location the user may currently be in.

To date, wireless interfaces have not been used in digital cameras for several reasons. Wireless interfaces increase the size, weight, and cost of the digital camera. Further, the batteries for most digital cameras are not sufficient to power a wireless transceiver. These design challenges have so far prevented use of wireless interfaces in small, portable digital cameras.

Docking stations with wireless interfaces are known, e.g. from WO-A-2006/029148, US-A-2004/201680 or US-A-2004/239772.

### SUMMARY

The present invention provides a wireless adapter for a digital camera to enable communication between the digital camera and remote devices over a wireless network as set out in appended claim 1. The wireless adapter comprises a detachable module that can be connected to and disconnected from the digital camera. The wireless adapter can be used with both digital still cameras and digital video cameras.

In one exemplary embodiment, the wireless adapter comprises at least one wireless interface for communicating with remote devices over a wireless network, a housing to enclose the wireless interface, a connector on the housing to detachably connect the wireless adapter to the digital camera, and a camera interface to electrically connect the wireless adapter to the digital camera. The wireless interface may include one or more antennas. The antennas can be fixed or movable. If two or more antennas are used, the antennas can operate in different frequency bands, or may be used to provide diversity.

Exemplary embodiments of the invention comprise a wireless adapter for a digital camera. In one embodiment, the wireless adapter comprises a wireless interface for communicating with remote devices, a housing for enclosing said wireless interface, a connector on said housing to detachably connect the wireless adapter to a digital camera, and a camera interface to electrically connect the wireless adapter with the digital camera.

In some embodiments, the camera interface includes an electrical connector to connect with a corresponding electrical connector on said digital camera.

In some embodiments, the camera interface comprises a serial interface.

In some embodiments, connector comprises a mounting screw that screws into a tripod connector on said digital camera.

In some embodiments, the wireless adapter includes at least one antenna coupled to said wireless interface.

In some embodiments, the wireless adapter includes s a fixed antenna.

In some embodiments, the wireless adapter includes an antenna that is movable between extended and retracted positions.

In some embodiments, the wireless adapter includes an antenna that is mounted for sliding movement between the extended and retracted positions.

In some embodiments, the wireless adapter includes an antenna that is mounted for pivotal movement between the extended and retracted positions.

In some embodiments, the housing includes a bottom portion that extends along a bottom of the digital camera and a side portion that extends along a side of said digital camera, and wherein said antenna is mounted to said side portion of said housing.

In some embodiments, the wireless adapter includes two antennas coupled to said wireless interface.

In some embodiments, the wireless adapter includes two antennas that operate in different frequency bands.

In some embodiments, the wireless adapter includes two antennas that are diversity antennas.

In some embodiments, the wireless adapter includes one antenna that is a fixed antenna and one antenna that is a movable antenna.

In some embodiments, the wireless adapter includes two antennas that are orthogonal to each other before and after the movable antenna is moved.

In some embodiments, the wireless adapter includes two antennas that are parallel to each other before the antenna is moved and orthogonal to each other after the movable antenna is moved.

In some embodiments, the wireless adapter includes a movable antenna that is mounted for sliding movement between extended and retracted positions.

In some embodiments, the wireless adapter includes a movable antenna that is mounted for pivotal movement between extended and retracted positions.

In some embodiments, the wireless adapter includes two antennas that are orthogonal to one another.

In some embodiments, the housing includes a bottom portion that extends along a bottom of the digital camera and a side portion that extends along a side of said digital camera, and a first one of said antennas is disposed in said side portion of said housing and a second one of said antennas is mounted to said bottom portion of said housing.

Preferably, the wireless adapter comprises a file transfer agent configured to transfer image data from the digital camera to a remote destination, and configured to emulate a printer and to transfer the image data to the emulated printer such that the image data is transmitted to one of the remote devices via the wireless interface.

### BRIEF DESCRIPTION OF THE DRAWINGS

Fig. 1 is a schematic diagram of an exemplary wireless networking environment in which a digital camera of the present invention may operate.
Fig. 2 is a block diagram of an exemplary wireless adapter for a digital camera according to one exemplary embodiment.
Figs. 3A and 3B illustrate a first exemplary method for connecting a wireless adapter to a digital camera.
Figs. 4A and 4B illustrate a second exemplary method for connecting a wireless adapter to a digital camera.
Figs. 5A and 5B illustrate a third exemplary method for connecting a wireless adapter to a digital camera.
Figs. 6A and 6B illustrate a fourth exemplary method for connecting a wireless adapter to a digital camera.
Figs. 7A - 7C illustrate an antenna arrangement for a wireless adapter for a digital camera having a single antenna
Fig. 8A - 8C illustrate an antenna arrangement for a wireless adapter for a digital camera having two antennas.
Figs. 9A - 9D illustrate antenna arrangements for a wireless adapter for a digital video camera.

### DETAILED DESCRIPTION

Referring now to the drawings, a wireless adapter 100 for a digital camera 10 is shown. The wireless adapter 100 enables wireless communications between the digital camera 10 and remote devices or services, such as a home computer 30, web album 32, web blog 34, or remote print server 36 over a wireless network. The wireless adapter 100 can be used with both digital still cameras and digital video cameras. The wireless adapter 100 detachably connects to the digital camera 10 and provides remote access capability to the digital camera 10 that otherwise lacks inherent wireless networking capabilities.

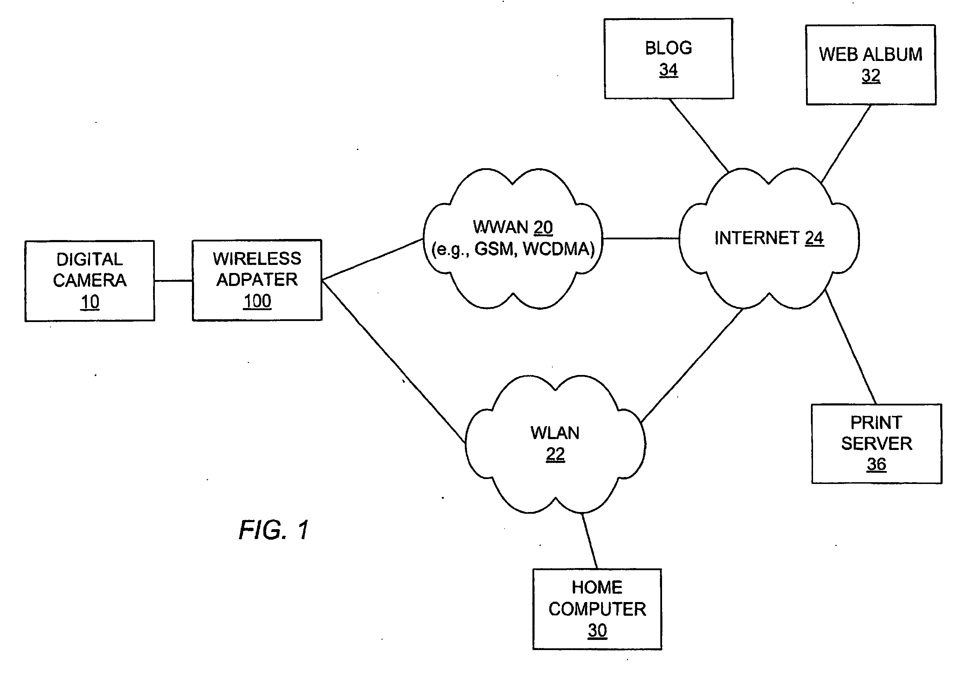

Figure 1 shows an exemplary networking environment in which the wireless adapter 100 can be used. As will be described in greater detail below, the wireless adapter 100 can connect to a wireless wide area network (WWAN) 20, such as a cellular network or WiMAX network, or to a wireless local area network (WLAN) 22. The WLAN 22 may comprise any local area network that can be accessed wirelessly, such as a home network with a wireless router. The WWAN 20 and/or WLAN 22 may provide connection to the Internet 24. A home computer 30 is connected to the WLAN 22. Web album 32, web blog 34, and print server 36 are connected to the Internet 24.

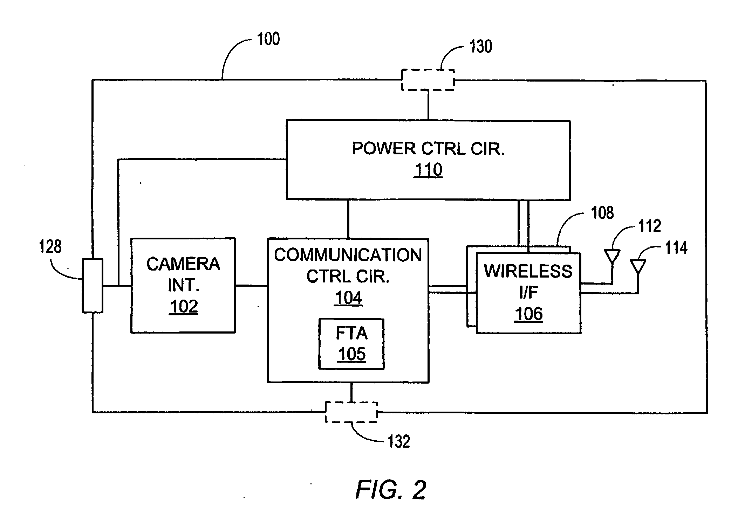

Figure 2 shows an exemplary wireless adapter 100. Wireless adapter 100 includes camera interface 102, communication control circuit 104, wireless interfaces 106, 108, and power control circuit 110. Camera interface 102 provides an interface to the digital camera 10 to enable communication between the wireless adapter 100 and digital camera 10. Communication control circuit 104 comprises processing circuits and memory for implementing file transfer agent functions and controlling the overall operation of the wireless adapter as herein after described. Wireless interfaces 106, 108 enable communication over wireless network, such as WWAN 20 and WLAN 22. Power control circuit 110 manages power to the wireless adapter 100. Power can be supplied by an internal battery (not shown) or an external power source via an optional connector 130.

Camera interface 102 may comprise a serial or parallel interface, such as a Universal Serial Bus (USB) interface, a Firewire interface, etc. Connector 128 connects the camera interface 102 with the digital camera 10. In one exemplary embodiment, the camera interface 102 functions as a USB host device and the digital camera functions as a USB client device. Power may be supplied by the digital camera 10 through the camera interface 102.

In one exemplary embodiment, wireless interface 106 enables long-range communication over a WWAN 20, while wireless interface 108 enables short-range wireless communication over WLAN 22. The wireless interface 106 may comprises a standard cellular transceiver, such as a GSM or CDMA transceiver. alternatively, the wireless interface 106 may comprise a WiMAX transceiver or OFDM transceiver. Wireless interface 108 may comprise, for example, a BLUETOOTH, WiFi, RFID, or NFC interface.

The communication control circuit 104 includes a file transfer agent (FTA) 105 to provide remote access capability. The file transfer agent 105 stores information about one or more remote destinations in memory of the wireless adapter 100. Such information may include the destination address for each destination and authentication information, such as the usemame and password for each destination. The file transfer agent 105 is configured to receive image data from the digital camera 10 and to transfer the image data to the remote destination via one of the wireless interfaces 106, 108. An optional configuration connector 132 can be provided for connecting the communication control circuit 104 to an external computer (not shown) to configure the wireless adapter 100.

In one embodiment, the file transfer agent 105 emulates a printer. In this embodiment, file transfer agent 105 implements PictBridge or other direct printing technology to communicate directly with the digital camera 10. The file transfer agent can create one or more emulated printers that appear to the digital camera 10 like any other printer. Each emulated printer is associated with a particular remote destination. When the user "prints" to an emulated printer, the file transfer agent 105 transfers the image data to a corresponding remote destination. By emulating a printer, the file transfer agent 105 provides networking capabilities to any digital camera 10 that implements Pictbridge or other direct printing technology.

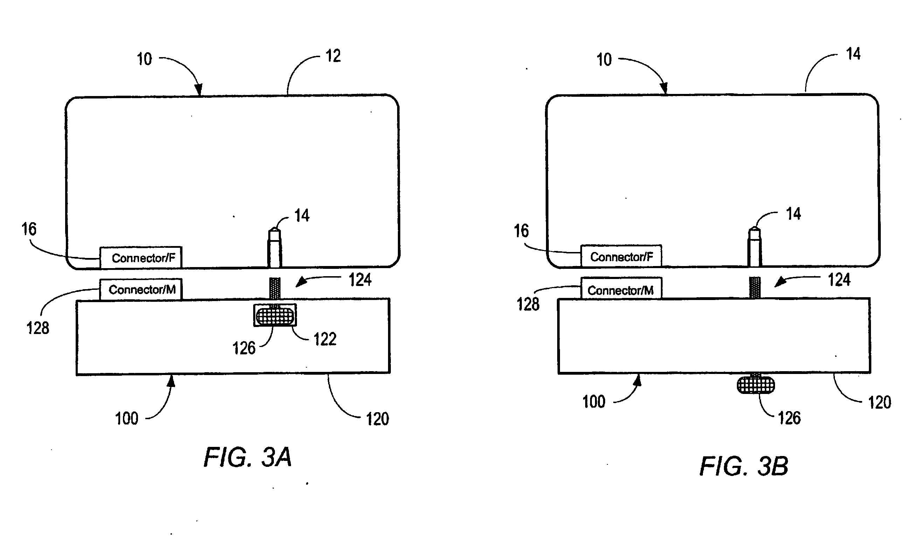

Figures 3A and 3B illustrate a first exemplary method for connecting the wireless adapter 100 with the digital camera 10. Both mechanical connections and electrical connections are shown. Mechanical connection is made by means of threaded connectors. The camera body 12 for the digital camera 10 includes a conventional tripod connector 14 with internal threads for mounting the digital camera 10 to a tripod (not shown). The wireless adapter body 120 includes a mounting screw 124 that threads into the tripod connector 14 on the camera body 12. The mounting screw 124 on the wireless adapter body includes a finger grip 126 that can be accessed through a window 122 in the wireless adapter body 120 as shown in Figure 3A. Alternatively, the mounting screw 124 can pass through the wireless adapter body 120 as shown in Figure 3B.

Electrical connection between the camera 10 and wireless adapter 100 is made by means of mating connectors. A female connector 16 is disposed on the camera body 12 and the male connector 128 is disposed on the wireless adapter body 120. The spacing and relative orientation between the male connector 128 and the mounting screw 124 on the wireless adapter body 120 is the same as the spacing and relative orientation between the female connector 16 and the tripod connector 14 on the camera body 12.

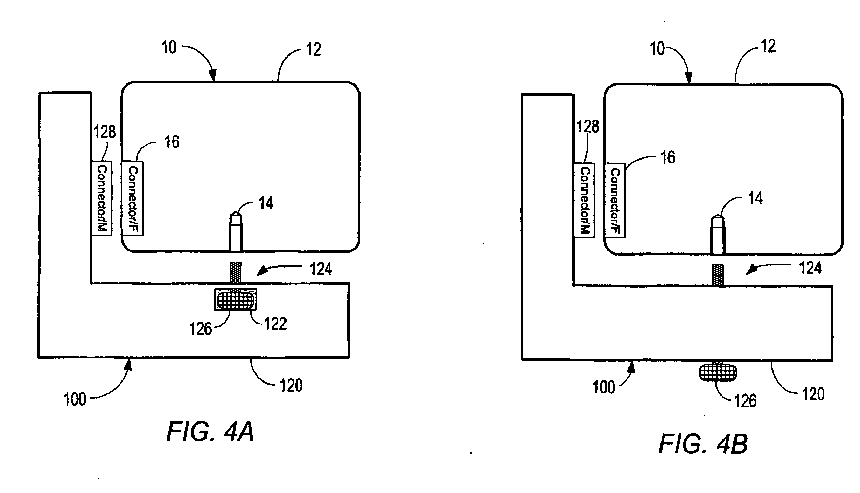

Figs. 4A and 4B illustrate a second exemplary method of connecting the wireless adapter 100 with the digital camera 10. The camera body 12 includes a tripod connector 14 as previously described on a bottom surface, and a female connector 16 along one side of the digital camera 10. The wireless adapter 100 extends along two sides of the digital camera 10. The wireless adapter 100 includes a mounting screw 124 and male connector 128 for connecting to the digital camera 10 as previously described. Figure 4A shows an embodiment in which the mounting screw 124 is accessed through a window 122 in the wireless adapter body 120. Figure 4B shows an embodiment in which the mounting screw 124 passes through the wireless adapter body 120.

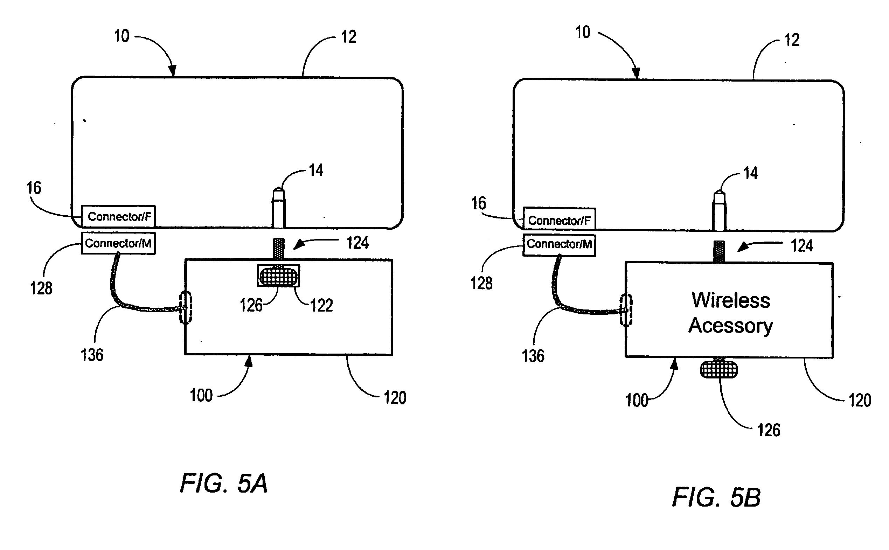

Figures 5A and 5B illustrate a third method for connecting the wireless adapter 100 to the digital camera 10. As in the two previous embodiments, the wireless adapter body 120 includes a mounting screw 124 adapted to engage with a tripod connector 14 on the camera body 12. The mounting screw 124 may be accessed through a window 122 in the adapter body as shown in Figure 5A, or may pass through the wireless adapter body 120 as shown in Figure 5B. The electrical connection is made by means of a cable connector 136 having a male connector 128 at one end thereof that engages a female connector 16 on the camera body 12. Figures 5A and 5B illustrate a fixed cable. Those skilled in the art will appreciate, however, that an additional connector (not shown) may be provided for disconnecting the cable connector 136 from the wireless adapter body.

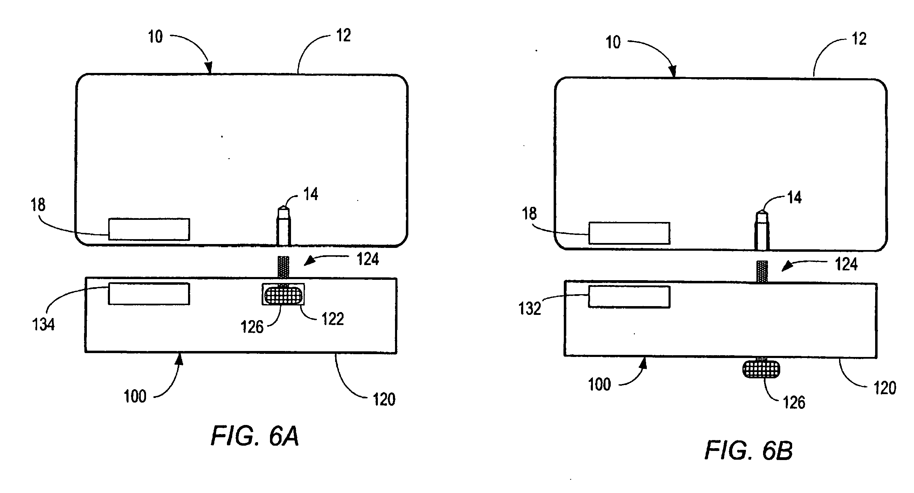

Figs. 6A and 6B illustrate a fourth method of connecting the wireless adapter 100 to the digital camera 10. The wireless adapter body 120 includes a mounting screw 124 adapted to engage with a tripod connector 14 on the camera body 12 as previously described. The mounting screw 124 may be accessed through a window 122 in the adapter body as shown in Figure 6A, or may pass through the wireless adapter body 120 as shown in Figure 6B. The electrical connection is made by a short-range wireless interfaces 18, 134. Short-range wireless interface 18, 134 may comprise such a near-filed communication (NFC) interface, or BLUETOOTH interface.

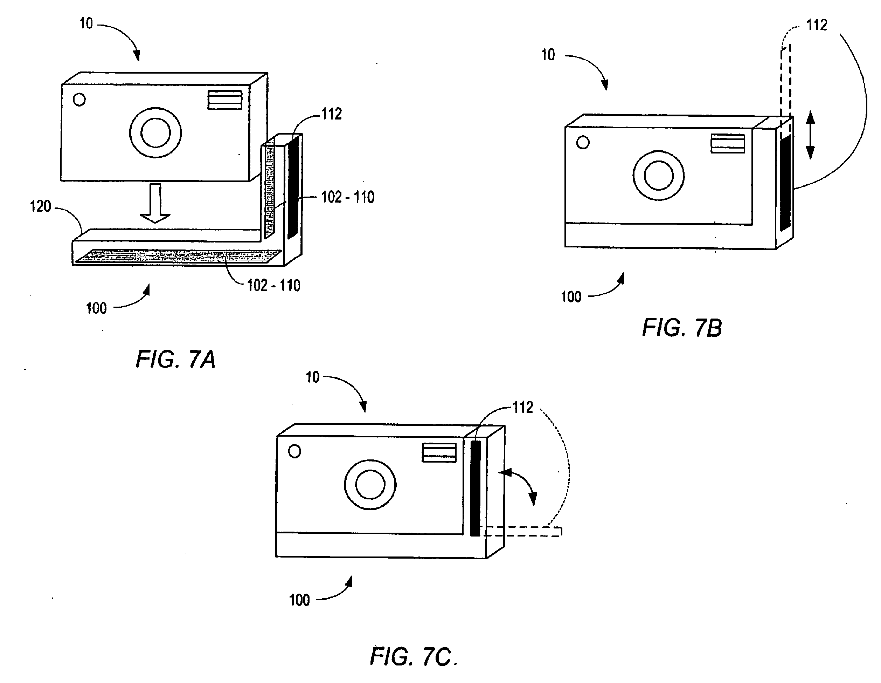

Figures 7A - 7C illustrate exemplary antenna arrangements for the wireless adapter 100. As shown in Figure 7A, the circuits in wireless adapter 100 may be disposed in a bottom and/or side portion of the adapter 100. The wireless adapter 100 in the illustrated embodiment extends along two sides of the digital camera 10. The bottom portion of the wireless adapter body 120 contains the mounting hardware and electrical circuits 102 -110 for the wireless adapter 100. The antenna 112 is contained within or mounts to the side portion of the wireless adapter body 120. The side portion may, if desired, include part of the electrical circuitry 102 - 110. The antenna 112 may be fixed in place as shown in Figure 7A. Alternatively, the antenna may slide between retracted and extended positions as shown in Figure 7B. In another embodiment, shown in Figure 7C, the antenna 112 is pivotally connected to the wireless adapter body 120 and pivots between retracted and extended positions.

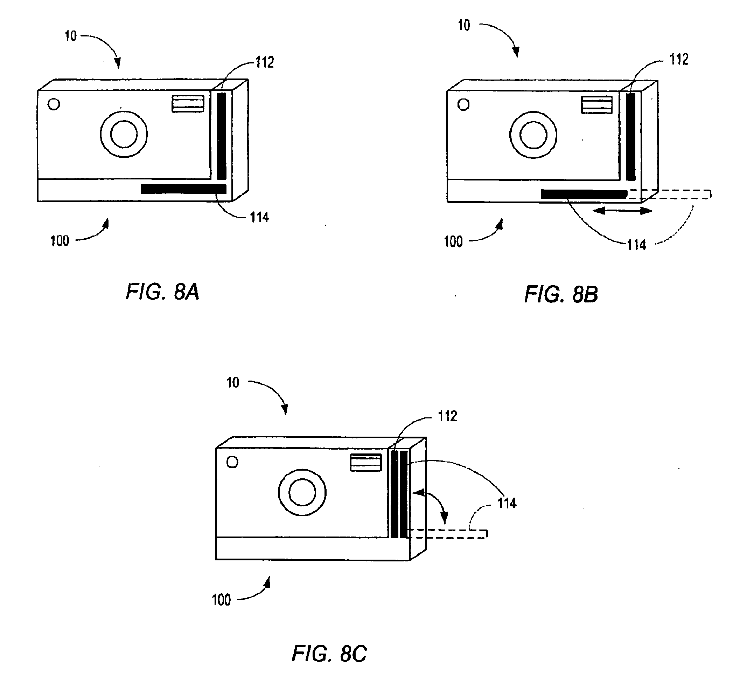

Figures 8A - 8C illustrate an embodiment in which the wireless adapter 100 includes two antennas 112 and 114. The two antennas 112, 114 may be used for transmitting in different frequency bands or may be used to provide diversity. In Figure 8A, the first antenna 112 is disposed on the side portion of the wireless adapter 100 as previously described, and a second antenna 114 is disposed on the bottom portion of the wireless adapter 100. The antennas 112, 114 may be fixed or movable. If movable, the antennas 112, 114 may slide or pivot between retracted and extended positions.

Figure 8B illustrates an embodiment of the wireless adapter having a fixed antenna 112 disposed on the side portion of the wireless adapter 100 and a second movable antenna disposed on the bottom portion of the wireless adapter 100. The movable antenna 114 may slide between retracted and extended positions.

Figure 8C illustrates an embodiment of the wireless adapter 100 having two antennas 112, 114 disposed on the side portion of the wireless adapter 100. The first antenna 112 is a fixed antenna and the second antenna 114 is a movable antenna. The movable antenna 114 pivots between retracted and extended positions.

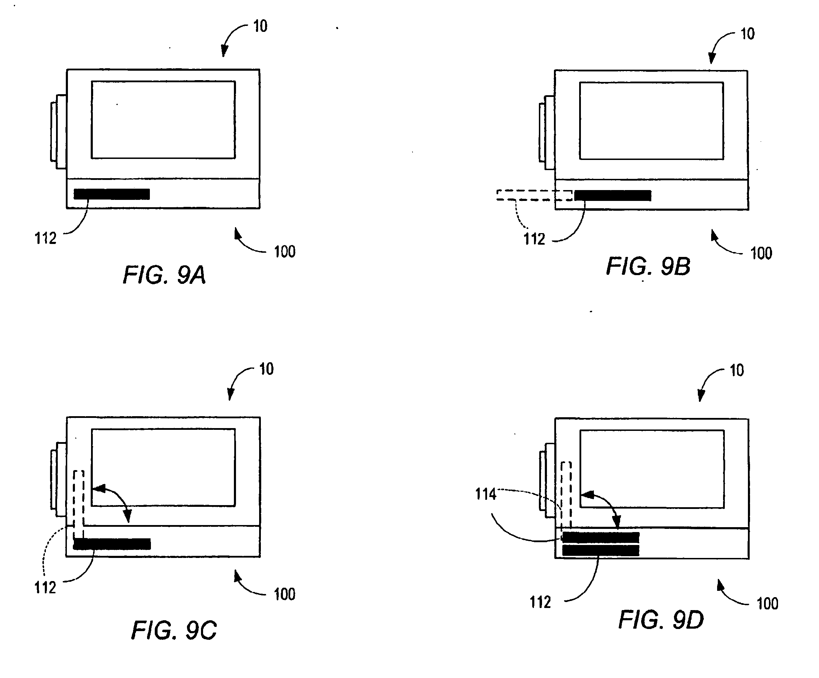

Figures 9A - 9D show embodiments of the wireless adapter 100 for a digital video camera 10. The wireless adapter 100 in these embodiments is adapted to mount to a bottom surface of the digital video camera 10. The wireless adapter 100 can be connected to the digital video camera 10 using the methods previously described and shown in Figs. 3 - 6. In Fig. 9A, the antennal 12 for the wireless adapter 100 is disposed toward a front end of the wireless adapter. Figure 9B shows a slidable antenna 112 that slides between extended and retracted positions. Figure 9C shows a pivoting antenna 112 that pivots between extended and retracted positions. Figure 9D shows an embodiment of the wireless adapter 100 for a digital video camera 10 having two antennas 112, 114. A first antenna 112 is fixed at the front end of the wireless adapter 100. A second antenna 114 is mounted for pivotal movement between extended and retracted positions. It will be appreciated that the second antenna 114 could also slide between extended and retracted positions.

The present invention may, of course, be carried out in other ways than those specifically set forth herein without departing from the invention. The present embodiments are to be considered in all respects as illustrative and not restrictive, and all changes coming within the meaning and equivalency range of the appended claims are intended to be embraced therein.

## Claims

1. A wireless adapter (100) for a digital camera (10) comprising:
a wireless interface (106, 108) for communicating with remote devices (30, 32, 34, 36);
a housing for enclosing said wireless interface (106, 108);
a connector (124) on said housing to detachably connect the wireless adapter (100) to a digital camera (10);
a camera interface (102) to connect the wireless adapter (100) with the digital camera (10);
**characterized by**:
a file transfer agent (105) configured to emulate a printer, and to transfer image data from the digital camera (10) to the emulated printer such that the image data is transmitted to one of the remote devices (30, 32, 34, 36) via the wireless interface (106, 108).

2. The wireless adapter (100) of claim 1 including at least one antenna (112, 114) coupled to said wireless interface (106, 108).

3. The wireless adapter (100) of claim 2 wherein the antenna (112, 114) is mounted for sliding movement between the extended and retracted positions.

4. The wireless adapter (100) of claim 2 wherein the antenna (112, 114) is mounted for pivotal movement between the extended and retracted positions.

5. The wireless adapter (100) of claim 2 wherein said housing includes a bottom portion that extends along a bottom of the digital camera (10) and a side portion that extends along a side of said digital camera (10), and wherein said antenna is mounted to said side portion of said housing.

6. The wireless adapter (100) of claim 2 including two antennas (112, 114) coupled to said wireless interface (106, 108).

7. The wireless adapter (100) of claim 6 wherein said two antennas (112, 114) operate in different frequency bands.

8. The wireless adapter (100) of claim 7 wherein the said two antennas (112, 114) are diversity antennas.

9. The wireless adapter (100) of claim 6 wherein one antenna (112) is a fixed antenna and one antenna (114) is a movable antenna.

10. The wireless adapter (100) of claim 9 wherein the two antennas (112, 114) are orthogonal to each other before and after the movable antenna (114) is moved.

11. The wireless adapter (100) of claim 9 wherein the two antennas (112, 114) are parallel to each other before the movable antenna (114) is moved and orthogonal to each other after the movable antenna (114) is moved.

12. The wireless adapter (100) of claim 9 wherein the movable antenna (114) is mounted for sliding movement between extended and retracted positions.

13. The wireless adapter (100) of claim 9 wherein the movable antenna (114) is mounted for pivotal movement between extended and retracted positions.

14. The wireless adapter (100) of claim 2 wherein said two antennas (112, 114) are orthogonal to one another.

15. The wireless adapter (100) of claim 2 wherein said housing includes a bottom portion that extends along a bottom of the digital camera (10) and a side portion that extends along a side of said digital camera (10), and wherein a first one of said antennas (112, 114) is disposed in said side portion of said housing and a second one of said antennas (112, 114) is mounted to said bottom portion of said housing.

## Patentansprüche

1. Drahtloser Adapter (100) für eine Digitalkamera (10) umfassend:
eine drahtlose Schnittstelle (106, 108), um sich mit abgesetzten Vorrichtungen (30, 32, 34, 36) in Verbindung zu setzen;
ein Gehäuse zum Umgeben der drahtlosen Schnittstelle (106, 108);
einen Verbinder (124) an dem Gehäuse, um den drahtlosen Adapter (100) mit einer Digitalkamera (10) lösbar zu verbinden;
eine Kameraschnittstelle (102), um den drahtlosen Adapter (100) mit der Digitalkamera (10) zu verbinden;
**gekennzeichnet durch**:
ein Dateiübertragungsmittel (105), welches ausgestaltet ist, einen Drucker nachzubilden und Bilddaten von der Digitalkamera (10) zu dem nachgebildeten Drucker derart zu übertragen, dass die Bilddaten zu einer der abgesetzten Vorrichtungen (30, 32, 34, 36) über die drahtlose Schnittstelle (106, 108) übertragen werden.

2. Drahtloser Adapter (100) nach Anspruch 1, welcher mindestens eine Antenne (112, 114) umfasst, welche mit der drahtlosen Schnittstelle (106, 108) gekoppelt ist.

3. Drahtloser Adapter (100) nach Anspruch 2, wobei die Antenne (112, 114) für eine Schiebebewegung zwischen der ausgefahrenen und zurückgezogenen Position angebracht ist.

4. Drahtloser Adapter (100) nach Anspruch 2, wobei die Antenne (112, 114) für eine Schwenkbewegung zwischen der ausgefahrenen und zurückgezogenen Position angebracht ist.

5. Drahtloser Adapter (100) nach Anspruch 2, wobei das Gehäuse einen Bodenabschnitt, welcher sich entlang einem Boden der Digitalkamera (10) erstreckt, und einen Seitenabschnitt, welcher sich entlang einer Seite der Digitalkamera (10) erstreckt, umfasst, und wobei die Antenne an dem Seitenabschnitt des Gehäuses angebracht ist.

6. Drahtloser Adapter (100) nach Anspruch 2, welcher zwei Antennen (112, 114) aufweist, welche mit der drahtlosen Schnittstelle (106, 108) gekoppelt sind.

7. Drahtloser Adapter (100) nach Anspruch 6, wobei die zwei Antennen (112, 114) in unterschiedlichen Frequenzbändern arbeiten.

8. Drahtloser Adapter (100) nach Anspruch 7, wobei die zwei Antennen (112, 114) Diversitätsantennen sind.

9. Drahtloser Adapter (100) nach Anspruch 6, wobei eine Antenne (112) eine ortsfeste Antenne ist und eine Antenne (114) eine bewegliche Antenne ist.

10. Drahtloser Adapter (100) nach Anspruch 9, wobei die zwei Antennen (112, 114), bevor und nachdem die bewegliche Antenne (114) bewegt wurde, orthogonal zueinander sind.

11. Drahtloser Adapter (100) nach Anspruch 9, wobei die zwei Antennen (112, 114) parallel zueinander sind, bevor die bewegliche Antenne (114) bewegt wurde, und orthogonal zueinander sind, nachdem die bewegliche Antenne (114) bewegt wurde.

12. Drahtloser Adapter (100) nach Anspruch 9, wobei die bewegliche Antenne (114) für eine Schiebebewegung zwischen einer ausgefahrenen und einer zurückgezogenen Position angebracht ist.

13. Drahtloser Adapter (100) nach Anspruch 9, wobei die bewegliche Antenne (114) für eine Schwenkbewegung zwischen einer ausgefahrenen und einer zurückgezogenen Position angebracht ist.

14. Drahtloser Adapter (100) nach Anspruch 2, wobei die zwei Antennen (112, 114) orthogonal zueinander sind.

15. Drahtloser Adapter (100) nach Anspruch 2, wobei das Gehäuse einen Bodenabschnitt, welcher sich entlang einem Boden der Digitalkamera (10) erstreckt, und einen Seitenabschnitt, welcher sich entlang der Seite der Digitalkamera (10) erstreckt, aufweist, und wobei eine erste der Antennen (112, 114) in dem Seitenabschnitt des Gehäuses angeordnet ist und eine zweite der Antennen (112, 114) an dem Bodenabschnitt des Gehäuses angebracht ist.

## Revendications

1. Adaptateur sans fil (100) pour une caméra numérique (10), comprenant :
une interface sans fil (106, 108) pour communiquer avec des dispositifs distants (30, 32, 34, 36) ;
un boîtier pour renfermer ladite interface sans fil (106, 108) ;
un connecteur (124) sur ledit boîtier pour connecter de façon détachable l'adaptateur sans fil (100) à une caméra numérique (10) ;
une interface de caméra (102) pour connecter l'adaptateur sans fil (100) à la caméra numérique (10) ;
**caractérisé par** :
un agent de transfert de fichiers (105) configuré de façon à émuler une imprimante et à transférer des données d'image de la caméra numérique (10) à l'imprimante émulée, de telle sorte que les données d'image soient transmises à l'un des dispositifs distants (30, 32, 34, 36) par l'intermédiaire de l'interface sans fil (106, 108).

2. Adaptateur sans fil (100) selon la revendication 1, comprenant au moins une antenne (112, 114) couplée à ladite interface sans fil (106, 108).

3. Adaptateur sans fil (100) selon la revendication 2, dans lequel l'antenne (112, 114) est montée pour un mouvement de coulissement entre les positions étendue et rétractée.

4. Adaptateur sans fil (100) selon la revendication 2, dans lequel l'antenne (112, 114) est montée pour un mouvement de pivotement entre les positions étendue et rétractée.

5. Adaptateur sans fil (100) selon la revendication 2, dans lequel ledit boîtier comprend une partie inférieure qui s'étend le long d'un fond de la caméra numérique (10) et une partie latérale qui s'étend le long d'un côté de ladite caméra numérique (10), et dans lequel ladite antenne est montée sur ladite partie latérale dudit boîtier.

6. Adaptateur sans fil (100) selon la revendication 2, comprenant deux antennes (112, 114) couplées à ladite interface sans fil (106, 108).

7. Adaptateur sans fil (100) selon la revendication 6, dans lequel lesdites deux antennes (112, 114) fonctionnent dans des bandes de fréquence différentes.

8. Adaptateur sans fil (100) selon la revendication 7, dans lequel lesdites deux antennes (112, 114) sont des antennes diversifiées.

9. Adaptateur sans fil (100) selon la revendication 6, dans lequel une antenne (112) est une antenne fixe et une antenne (114) est une antenne mobile.

10. Adaptateur sans fil (100) selon la revendication 9, dans lequel les deux antennes (112, 114) sont orthogonales entre elles avant et après que l'antenne mobile (114) a été déplacée.

11. Adaptateur sans fil (100) selon la revendication 9, dans lequel les deux antennes (112, 114) sont parallèles entre elles avant que l'antenne mobile (114) n'ait été déplacée, et orthogonales entre elles après que l'antenne mobile (114) a été déplacée.

12. Adaptateur sans fil (100) selon la revendication 9, dans lequel l'antenne mobile (114) est montée pour un mouvement de coulissement entre des positions étendue et rétractée.

13. Adaptateur sans fil (100) selon la revendication 9, dans lequel l'antenne mobile (114) est montée pour un mouvement de pivotement entre des positions étendue et rétractée.

14. Adaptateur sans fil (100) selon la revendication 2, dans lequel lesdites deux antennes (112, 114) sont orthogonales entre elles.

15. Adaptateur sans fil (100) selon la revendication 2, dans lequel ledit boîtier comprend une partie inférieure qui s'étend le long d'un fond de la caméra numérique (10) et une partie latérale qui s'étend le long d'un côté de ladite caméra numérique (10), et dans lequel une première desdites antennes (112, 114) est disposée dans ladite partie latérale dudit boîtier et une deuxième desdites antennes (112, 114) est montée sur ladite partie inférieure dudit boîtier.
